(19) Europäisches Patentamt / European Patent Office / Office européen des brevets

(11) **EP 2 342 840 B1**

(12) **FASCICULE DE BREVET EUROPEEN**

(45) Date de publication et mention
de la délivrance du brevet:
**15.08.2012 Bulletin 2012/33**

(21) Numéro de dépôt: **09801728.8**

(22) Date de dépôt: **21.08.2009**

(51) Int Cl.:
***H04B 7/185*** *(2006.01)*

(86) Numéro de dépôt international:
**PCT/FR2009/051614**

(87) Numéro de publication internationale:
**WO 2010/037939 (08.04.2010 Gazette 2010/14)**

(54) **GRILLE DE STATIONS TERRESTRES DE RECEPTION ET D'ENREGISTREMENT DE DONNEES SATELLITAIRES**

BODENSTATIONSNETZ FÜR DEN EMPFANG UND DIE SPEICHERUNG VON SATELLITENDATEN

GRID OF GROUND STATIONS FOR RECEIVING AND STORING SATELLITE DATA

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.08.2008 FR 0804742**
**15.07.2009 FR 0903453**

(43) Date de publication de la demande:
**13.07.2011 Bulletin 2011/28**

(73) Titulaire: **Centre National d'Etudes Spatiales (C.N.E.S.)**
**75039 Paris Cedex 01 (FR)**

(72) Inventeur: **ANTIKIDIS, Jean-Pierre**
**F-31320 Castanet (FR)**

(74) Mandataire: **Cabinet BARRE LAFORGUE & associés**
**95, rue des Amidonniers**
**31000 Toulouse (FR)**

(56) Documents cités:
**GB-A- 2 432 486          US-A- 5 883 584**
**US-A1- 2004 215 931**

- **TEO Y M ET AL: "Distributed geo-rectification of satellite images using grid computing" PARALLEL AND DISTRIBUTED PROCESSING SYMPOSIUM, 2003. PROCEEDINGS. INTERNATIONAL APRIL 22-26, 2003, PISCATAWAY, NJ, USA,IEEE, 22 avril 2003 (2003-04-22), pages 15-22, XP010645301 ISBN: 978-0-7695-1926-5**

## Description

L'invention concerne un dispositif, désigné dans tout le texte par « grille satellitaire », comprenant une pluralité de stations terrestres, communicantes entre elles, de réception et d'enregistrement de données. Une station terrestre de réception et d'enregistrement des données est une station dotée de moyens de réception de données d'observation en provenance d'au moins un satellite en orbite autour de la Terre, et de moyens de mémorisation de données (mémoire(s) de masse).

L'invention s'étend également à un dispositif d'observation -notamment d'observation de la Terre- comprenant :

- au moins une constellation de satellites déployée en orbite autour de la Terre, chaque satellite comprenant au moins un dispositif d'acquisition de données d'observation, et au moins un dispositif de transmission de ces données d'observation à destination d'antennes de réception situées à la surface de la Terre,
- une pluralité de stations terrestres de réception et d'enregistrement de données d'observation réparties à la surface de la Terre, chaque station terrestre de réception et d'enregistrement étant reliée à au moins une antenne de réception -notamment à une antenne de réception qui lui est propre-, ces stations étant communicantes entre elles,
- le dispositif de transmission de chaque satellite étant adapté pour pouvoir transmettre des données d'observation à toute antenne de réception située dans un champ de vision de ce dispositif de transmission, chaque antenne de réception étant adaptée pour pouvoir recevoir des données d'observation transmises par un satellite lorsque ladite antenne de réception est située dans le champ de vision du dispositif de transmission dudit satellite.

De façon générale, dans tout le texte, le terme « observation » désigne toute acquisition de données, y compris des mesures de paramètres physiques (températures, rayonnements, données topographiques, images dans les différentes longueurs d'onde visibles ou non...), et les termes « observation de la Terre » désignent toute acquisition de données d'observation concernant la Terre - notamment en provenance de la Terre -.

L'invention vise en particulier (bien que non exclusivement) à proposer un tel dispositif d'observation de la Terre plus particulièrement destiné à l'acquisition et à la fourniture d'images d'observation terrestre et présentant une résolution-sol élevée (10 mètres ou moins, notamment de l'ordre d'un mètre) et une fréquence élevée de couverture globale de la Terre (2 semaines ou moins, notamment de l'ordre de la journée).

Dans tout le texte, la fréquence de couverture globale de la Terre désigne la fréquence avec laquelle un dispositif d'observation permet une prise de vue complète de la Terre.

L'observation de la Terre par des instruments satellisés a pris naissance dans les années 1950 avec le développement d'instruments dédiés notamment à la météorologie. De tels instruments n'ont cessé de se développer depuis, privilégiant alternativement, selon les applications visées, la résolution-sol ou la fréquence de rafraîchissement.

On compte aujourd'hui un grand nombre d'instruments d'observation terrestre parmi lesquels LANDSAT, MODIS, IKONOS, QUICK BIRD, EROS, SPOT-5, SPOT-4, etc. Ces instruments permettent de répondre à de nombreux besoins en imagerie dans des domaines aussi variés que l'agriculture, la cartographie, le cadastre, la défense, l'environnement, la planification urbaine, les télécommunications, la gestion des risques, la gestion des ressources renouvelables, etc. Dans tous les cas, il est prévu que les données d'observation reçues par les stations sol depuis les satellites soient rapatriées dans un site central de traitement et d'archivage permettant de rationaliser ces différentes données, les mettre à jour, et les mettre en cohérence élue avec les autres. Un tel site central permet également de distribuer les données d'observation à des utilisateurs de façon cohérente et homogène quant à leur date et à leur contenu. Un tel rapatriement de données d'observation satellitaire vers un site central pose le plus souvent des problèmes de connexion et de bande passante, compte tenu du très grand volume de ces données. Par exemple, GB 2432486 prévoit de réutiliser les satellites de la constellation pour rapatrier des données vers une station sol utilisateur. Une telle solution est extrêmement coûteuse et complexe, et non totalement satisfaisante.

Les instruments IKONOS, QUICKBIRD, EROS, etc., sont des satellites à très haute résolution qui permettent des résolutions-sol de l'ordre du mètre. En revanche, ils présentent des taux de rafraîchissement de l'ensemble du globe supérieurs à un mois.

Les instruments MODIS, MERIS, etc. sont des instruments qui présentent des résolutions faibles, mais des taux de rafraîchissement de l'ensemble du globe élevés, de l'ordre de 3 jours à une semaine.

En d'autres termes, au vu de l'état de la technique, la conception d'un instrument d'acquisition et de fourniture de données satellitaires d'observation - notamment d'observation terrestre - est soumise à des contraintes contradictoires. On a ainsi le choix entre un instrument à résolution spatiale élevée -de l'ordre du mètre- mais à fréquence de couverture globale faible -de l'ordre de la semaine ou du mois-, et un instrument à fréquence de couverture globale élevée -de l'ordre de la journée- mais à résolution spatiale faible -de l'ordre de 100 mètres-.

Des solutions alternatives ont été proposées pour pouvoir bénéficier d'une fréquence élevée de couverture de zones spécifiques prédéterminées, tout en bénéficiant d'une résolution spatiale intéressante. Elles consistent à recourir à un ou plusieurs satellites équipés d'instruments optiques d'acquisition d'images adaptés pour permettre un dépointage de ces instruments. En effet, le fait de pouvoir acquérir des images en dehors de la trace naturelle d'un satellite permet l'observation, au cours de plusieurs rotations successives du satellite, de la même zone géographique.

Par exemple, la constellation de satellites SPOT offre une capacité d'acquisition et un taux de rafraichissement qui permet d'acquérir une image d'une zone prédéterminée du globe chaque jour. Cette constellation comprend une pluralité de satellites, placés sur une orbite polaire, circulaire, héliosynchrone et en phase par rapport à la Terre. Chaque satellite présente un cycle de 26 jours. Chaque satellite comprend des instruments optiques, des enregistreurs de données et des systèmes de transmission des images vers des stations de réception au sol. Les instruments optiques sont adaptés pour assurer des visées obliques paramétrables, de telle sorte qu'une même région peut être observée plusieurs fois au cours du cycle de 26 jours. Les enregistreurs de données permettent de stocker les images à bord si le satellite n'est pas en visibilité d'une station sol.

Cette constellation peut ainsi présenter une fréquence élevée de couverture d'une zone spécifique de la Terre. Néanmoins, la fréquence de couverture globale ne peut être inférieure à 26 jours. Plus encore, si la constellation est programmée de telle sorte que de nombreux dépointages sont effectués au cours du cycle de 26 jours, la fréquence de couverture globale de la Terre peut être largement supérieure à 26 jours.

Un autre inconvénient d'une telle solution réside dans le coût de la fabrication, de l'installation, de la gestion et de la maintenance d'une constellation de satellites à dépointage. En particulier, une telle constellation nécessite l'installation et la gestion au sol d'une pluralité de stations sol opérées de façon autonome les unes par rapport aux autres et adaptées pour envoyer les données images reçues vers un serveur central de sauvegarde des images en vue de leur distribution. De plus, chaque instrument de chaque satellite est piloté depuis le sol par une équipe de spécialistes chargée de déterminer et d'optimiser, en fonction des demandes, les dépointages des instruments optiques. De plus, chaque satellite doit comprendre des enregistreurs pour pallier une absence de visibilité d'une station sol. Chaque satellite comprend en outre un système de transmission au sol spécifique.

Par ailleurs, une telle solution se heurte à une difficulté pratique majeure. En effet, la couverture de l'ensemble du globe terrestre par une telle constellation de satellites en vue de fournir des images présentant une résolution spatiale de l'ordre du mètre et une fréquence de couverture globale de l'ordre de la journée impose la gestion par le serveur central de l'ordre de 1 500 téraoctets de données par jour, soit 170 giga-octets par seconde, dépassant largement les capacités de transmission satellitaire et de traitement sol accessibles avec les technologies et les architectures des serveurs actuellement disponibles. Par ailleurs, le même problème se pose pour les données en provenance d'instruments d'observation de l'espace à partir de satellites.

Le document US-A- 5 883 584 divulgue un dispositif comprenant une pluralité de stations terrestres de réception et d'enregistrement de données dotées de moyens de mémorisation de ces données, chaque station terrestre étant associée à des moyens de réception de données d'observation en provenance d'au moins un satellite en orbite autour de la Terre.

L'invention vise à pallier ces inconvénients, à surmonter ces difficultés et à proposer un nouveau concept de dispositif d'enregistrement de données d'observation satellitaire qui permet l'enregistrement de flux de données extrêmement importants, notamment pouvant être très supérieurs à 100 giga-octets par seconde. Plus particulièrement, l'invention vise à proposer un tel dispositif qui ne nécessite pas de serveur central de distribution et/ou d'enregistrement des données.

L'invention vise également à proposer un tel dispositif -notamment un dispositif d'observation- adapté pour alimenter les vecteurs d'information de masse disponibles sur le réseau Internet.

Pour ce faire, l'invention concerne un dispositif comprenant une pluralité de stations terrestres de réception et d'enregistrement de données dotées de moyens de mémorisation de ces données, chaque station terrestre de réception et d'enregistrement étant associée à des moyens de réception de données d'observation en provenance d'au moins un satellite en orbite autour de la Terre, caractérisé en ce que :

- les données d'observation reçues d'au moins un satellite - notamment de chaque satellite- sont et restent réparties dans les moyens de mémorisation des différentes stations terrestres de réception et d'enregistrement,
- chaque station terrestre de réception et d'enregistrement est reliée fonctionnellement aux autres stations terrestres de réception et d'enregistrement par au moins un réseau numérique, et est dotée d'au moins un module, dit module de gestion, adapté pour que les différentes stations terrestres de réception et d'enregistrement soient interconnectées les unes aux autres par les différents modules de gestion via le(les) réseau(x) numérique(s), selon une architecture, dite grille satellitaire, adaptée pour permettre un accès partagé transparent permanent auxdites données d'observation en provenance d'au moins un satellite -notamment de chaque satellite- enregistrées réparties dans les moyens (13) de mémorisation des différentes stations (5) terrestres, ladite grille satellitaire étant adaptée pour rendre l'ensemble de

données d'observation enregistrées réparties dans les différentes stations terrestres de réception et d'enregistrement accessible et vu comme un jeu de données d'observation unique à partir de tout point d'accès du(des) réseau(x) (15) numérique(s).

Une telle grille satellitaire selon l'invention dans lequel une pluralité de stations terrestres de réception et d'enregistrement de données d'observation satellitaire sont fonctionnellement interconnectées entre elles pour partager automatiquement, en permanence, et de façon totalement transparente les données d'observations qui sont et restent enregistrées dans chaque station, et donc que distribuées au sein des différentes stations terrestres de réception et d'enregistrement sans être rapatriées vers un site central, constitue un nouvel objet bouleversant totalement la conception et le mode de fonctionnement des instruments d'observation satellitaire l'incorporant. En effet, une telle grille satellitaire selon l'invention est un élément constitutif d'un ou plusieurs dispositif(s) d'observation, en ce sens qu'un tel dispositif d'observation devient totalement inopérant en l'absence de la grille satellitaire selon l'invention.

En outre, un dispositif selon l'invention présente des fonctionnalités inédites : les capacités d'enregistrement d'un tel dispositif sont virtuellement illimitées, puisqu'il suffit de multiplier le nombre de stations terrestres de réception et d'enregistrement pour augmenter les capacités d'enregistrement et le flux (dans la limite du flux pouvant être émis par les satellites correspondants) ; aucun serveur central de référencement des données ou de distribution des données n'est nécessaire ; toutes les données d'observation sont accessibles de n'importe quel point d'accès à la grille satellitaire, immédiatement et en temps réel ; le fonctionnement du dispositif est automatiquement assuré, sans nécessiter aucune maintenance spécifique (en particulier, une panne sur l'une quelconque des stations terrestres de réception et d'enregistrement n'a aucune incidence sur le fonctionnement des autres stations terrestres de réception et d'enregistrement et du dispositif en général) ; il peut être associé dynamiquement à un ou plusieurs satellites et/ou à une ou plusieurs constellations de satellites ; il peut être mis à disposition d'utilisateurs de façon extrêmement simple, sûre et fiable, avec toutes les variantes possibles et appropriées de contrôle d'accès en lecture et/ou en écriture et/ou en administration des données enregistrées dans les différentes stations.

Avantageusement, un dispositif selon l'invention est aussi caractérisé en ce que chaque station terrestre de réception et d'enregistrement est en outre associée à des moyens d'émission de données vers au moins un satellite, et en ce qu'il comprend au moins un module de télécommande adapté pour pouvoir générer au moins une commande à destination d'au moins un satellite et émettre une telle commande sur la grille satellitaire. Ainsi, le dispositif selon l'invention peut être utilisé non seulement pour la réception de données d'observation satellitaire et leur enregistrement distribué, mais aussi pour le contrôle de chaque satellite associé au dispositif selon l'invention.

Avantageusement et selon l'invention, ledit réseau numérique de ladite grille satellitaire est un réseau numérique terrestre, notamment un réseau numérique terrestre public tel que le réseau Internet.

Par ailleurs, un dispositif selon l'invention est avantageusement aussi caractérisé en ce qu'il comprend au moins un serveur terrestre, dit serveur géoportail, relié par ledit réseau numérique à ladite grille, ce serveur géoportail étant accessible aux utilisateurs via ce réseau numérique, et étant adapté pour gérer des autorisations d'accès à la grille par les utilisateurs. Un tel serveur géoportail n'est cependant pas un serveur central d'enregistrement ou de référencement des données. Un dispositif selon l'invention est ainsi exempt de tout serveur ou site central d'enregistrement et/ou de référencement et/ou de distribution des données d'observation.

L'invention s'étend à un dispositif d'observation tel que mentionné ci-dessus, caractérisé en ce qu'il comprend un dispositif terrestre selon l'invention formé par lesdites stations terrestres de réception et d'enregistrement. Autrement dit, dans un dispositif d'observation selon l'invention, toutes les stations terrestres de réception et d'enregistrement sont interconnectées pour former un dispositif terrestre (grille satellitaire) selon l'invention.

Ainsi, dans un dispositif d'observation selon l'invention, chaque station terrestre de réception et d'enregistrement est reliée à au moins un réseau numérique et est dotée d'au moins un module, dit module de gestion, adapté pour que les différentes stations terrestres de réception et d'enregistrement soient interconnectées les unes aux autres via ledit réseau numérique selon une architecture, dite grille satellitaire, adaptée pour permettre un accès partagé transparent permanent aux données d'observation enregistrées dans les moyens de mémorisation des différentes stations terrestres de réception et d'enregistrement, ladite grille satellitaire étant adaptée pour pouvoir être accessible et vue comme une ressource informatique unique à partir de tout point d'accès dudit réseau numérique.

Les modules de gestion de chaque station terrestre de réception et d'enregistrement d'un dispositif selon l'invention peuvent être formés de modules de grille, connus en eux-mêmes, permettant de réaliser des grilles informatiques, c'est-à-dire des architectures informatiques fondées sur un réseau et permettant le partage transparent, par des systèmes et applications hétérogènes, de données et/ou ressources informatiques (cf. notamment http://fr.wikipedia.org/wiki/Grid computing, Globus ToolKit, ou encore les suites logicielles gLite (EGEE), UNICORE, ou Synfiniway (Fujitsu), ou le logiciel e-mule). Rien n'empêche cependant également de développer des modules de grille spécifiques.

Les technologies de grille informatique permettent en particulier de distribuer et de partager des capacités de calcul importantes, par la mise en réseau et l'interconnexion de moyens informatiques puissants. Elles sont donc utilisées principalement par les centres de recherche et des entreprises ayant besoin de grandes puissances de traitement.

Bien que la puissance de calcul ne soit pas un facteur déterminant dans la conception d'un dispositif d'observation -notamment un instrument d'observation de la Terre -, l'inventeur a déterminé que l'utilisation d'une technologie de grille pour l'interconnexion permanente de stations terrestres de réception et d'enregistrement de données d'observation, permet de conférer des fonctionnalités inédites, et, en réalité, d'obtenir un dispositif d'observation distribué permettant l'obtention de performances inégalées à un coût extrêmement réduit. En particulier, les données d'observation peuvent être réparties dans les différentes stations terrestres de réception et d'enregistrement, et être néanmoins accessibles de n'importe quel point d'accès au réseau, immédiatement et en temps réel. Également, les données d'observation peuvent être transmises et/ou échangées entre les stations terrestres de réception et d'enregistrement de façon totalement transparente, en fonction des besoins ou de contraintes imposées. De même, l'interconnexion des stations terrestres de réception et d'enregistrement sous forme d'une grille permet de faciliter le télécontrôle de la constellation de satellites à partir du sol.

L'invention est en particulier avantageusement applicable à l'enregistrement de données d'observation de la Terre. En particulier, avantageusement, un dispositif selon l'invention est aussi caractérisé en ce que le dispositif d'acquisition de données d'observation de chaque satellite présente un champ de vision prédéterminé correspondant à une zone de la surface de la Terre en visibilité de ce dispositif d'acquisition, et en ce que chaque station terrestre de réception et d'enregistrement comprend des moyens de mémorisation de données d'observation issues au moins d'une zone terrestre, dite zone d'observation enregistrée, comprenant au moins l'enveloppe des champs de vision du dispositif d'acquisition de chaque satellite dans lesquelles l'antenne de réception de la station terrestre de réception et d'enregistrement est située, le nombre et la répartition des différentes stations terrestres de réception et d'enregistrement étant adaptés pour que lesdites zones d'observation enregistrées correspondantes soient complémentaires et permettent une couverture d'une surface terrestre à observer, les différentes données d'observation correspondant à cette surface à observer étant réparties dans les moyens de mémorisation des différentes stations terrestres de réception et d'enregistrement, ladite grille satellitaire étant une grille de stockage adaptée pour que toutes les données d'observation mémorisées par les différentes stations terrestres de réception et d'enregistrement soient accessibles en permanence comme une ressource informatique unique à partir de tout point d'accès du réseau numérique de ladite grille satellitaire.

Il est à noter que dans un dispositif selon l'invention, il est possible de créer des zones d'observation enregistrées associées à une station terrestre de réception et d'enregistrement de façon virtuelle, ne correspondant pas nécessairement au cercle de visibilité de l'antenne de réception de la station terrestre de réception et d'enregistrement ni aux champs de vision des satellites survolant cette antenne. Ainsi, avantageusement et selon l'invention, la zone d'observation enregistrée d'au moins une station terrestre de réception et d'enregistrement comprend au moins une zone située en dehors de l'enveloppe des champs de vision des satellites contenant l'antenne de réception de la station terrestre de réception et d'enregistrement. Cela permet d'une part que les données d'observation puissent être réparties de façon optimale entre les différentes stations terrestres de réception et d'enregistrement, et ce aussi bien du point de vue de la capacité de mémorisation que de l'efficacité de l'utilisation des données d'observation (notamment en minimisant la distance entre chaque utilisateur potentiel et la station terrestre de réception et d'enregistrement où les données d'observation correspondantes sont enregistrées de façon à réduire l'occupation du réseau). Mais cela permet également de prévoir qu'un satellite puisse transmettre des données d'observation à l'une quelconque des stations terrestres de réception et d'enregistrement, ces données d'observation étant ensuite mémorisées dans des moyens de mémorisation d'une quelconque station terrestre de réception et d'enregistrement, identique ou non à celle qui a reçu initialement ces données d'observation de la part du satellite. L'architecture en grille des différentes stations terrestres de réception et d'enregistrement permet en effet un routage des données d'observation automatique, simple et transparent vers la station terrestre de réception et d'enregistrement appropriée, selon un protocole prédéterminé pouvant être quelconque.

Dans une variante avantageuse de l'invention, chaque station terrestre de réception et d'enregistrement est adaptée pour rechercher et incorporer dans ses moyens de mémorisation les données d'observation de chaque station terrestre de réception et d'enregistrement dont la zone d'observation enregistrée est adjacente à la sienne, de sorte que chaque station terrestre de réception et d'enregistrement incorpore une mosaïque locale des différentes zones d'observation enregistrées adjacentes à la sienne.

Par ailleurs, avantageusement et selon l'invention, les données d'observation sont transmises par chaque dispositif de transmission d'un satellite selon un format incorporant des métadonnées et/ou données, dites données de géolocalisation, représentatives de la localisation de la zone observée et de la date d'observation. Ainsi, dans le cas d'observations terrestres, les données d'observation de la Terre telles que transmises par chaque satellite sont « géolocalisées », c'est-à-dire incorporent les informations permettant de déterminer à quelle portion de la surface de la Terre elles correspondent, de sorte qu'elles peuvent être automatiquement routées par la grille vers la station terrestre de réception et d'enregistrement sur laquelle elles doivent être enregistrées, et, ultérieurement, automatiquement sélectionnées via la grille en réponse à une requête d'utilisateur. À ce titre, il est à noter que les données d'observation transmises par un satellite subissent au moins un traitement de la part d'une station terrestre de réception et d'enregistrement (celle associée à l'antenne de réception où elles sont reçues et/ou celle où elles sont enregistrées) avant leur enregistrement dans les moyens de mémorisation d'une station terrestre de réception et d'enregistrement. Mais, en tout état cause, ce traitement conserve les données de géolocalisation.

Par ailleurs, dans une variante avantageuse, un dispositif selon l'invention est aussi caractérisé en ce que chaque station terrestre de réception et d'enregistrement est en outre associée à une antenne d'émission vers un satellite, et en ce que les antennes de réception et d'émission, les dispositifs de transmission des satellites et les stations terrestres de réception et d'enregistrement sont adaptés pour permettre l'établissement d'échanges bidirectionnels entre les satellites et les stations terrestres de réception et d'enregistrement. En particulier, cela permet un contrôle de la constellation de satellites de façon simple et décentralisée, de sorte qu'il n'est plus nécessaire de prévoir un centre de contrôle unique, et que des commandes peuvent être émises vers chaque satellite à tout instant depuis n'importe quel point d'accès à la grille. Ainsi, avantageusement un dispositif selon l'invention, comprend au moins un module de télécommande adapté pour pouvoir émettre des commandes vers chaque satellite, et chaque module de télécommande est relié audit réseau numérique et à la grille de stations terrestres de réception et d'enregistrement à laquelle il adresse chaque commande à transmettre vers un satellite.

Dans une première variante, le module de télécommande détermine au moins une station terrestre de réception et d'enregistrement à laquelle la commande est destinée, chargée d'émettre cette commande vers le satellite destinataire.

Dans une autre variante, la dite commande est émise simultanément par toutes les stations terrestres de réception et d'enregistrement associées à une antenne d'émission. Une telle commande est alors reçue par chaque satellite à partir de la station terrestre de réception et d'enregistrement reliée à l'antenne d'émission la plus proche de ce satellite. La commande comprenant un code d'identification du satellite auquel elle est destinée, chaque satellite peut déterminer si cette commande lui est destinée ou non.

La constellation spatiale de satellites peut être reliée à la grille satellitaire des stations terrestres de réception et d'enregistrement selon des moyens de liaison et de communication spécifiques ne faisant pas partie intégrante du réseau numérique formant la grille satellitaire. Néanmoins, selon une variante avantageuse et préférentielle de l'invention, chaque satellite comprend également lui-même un module de grille de façon à être incorporé à la grille satellitaire formée par les différentes stations terrestres de réception et d'enregistrement et le réseau numérique qui les relie. Ainsi, dans un dispositif selon l'invention, chaque satellite, comme chaque station terrestre de réception et d'enregistrement, est un noeud de la grille satellitaire, de sorte que les communications sont grandement facilitées et peuvent bénéficier de tous les avantages et de toutes les fonctionnalités avancées permises par une telle grille satellitaire (gestion simplifiée et transparente du partage des données, gestion simplifiée des accès des différents satellites aux différentes stations terrestres de réception et d'enregistrement et réciproquement, robustesse de fonctionnement, par exemple en cas de panne de l'un des satellites ou de l'une des stations terrestres de réception et d'enregistrement...).

Avantageusement et selon l'invention, le réseau numérique de ladite grille satellitaire est un réseau numérique terrestre public, notamment le réseau Internet supportant notamment les liaisons entre les différentes stations terrestres de réception et d'enregistrement. Il est à noter à ce titre que la nature des liaisons physiques de communication entre les différents noeuds d'une grille n'a pas d'importance et peut être quelconque et variable au sein d'une même grille (liaisons filaires, liaisons par fibres optiques, liaisons via satellites de communications, liaisons cellulaires de type GSM ou autre...). En effet, un module de grille est une couche logicielle rapportée sur un ou plusieurs réseau(x) en fonctionnement et compatible avec tous les formats de réseaux et de plates-formes.

Par ailleurs, un dispositif d'observation selon l'invention comprend avantageusement un serveur terrestre, dit serveur géoportail, relié par ledit réseau numérique public à ladite grille satellitaire, ce serveur géoportail étant accessible aux utilisateurs via ce réseau numérique public, et étant adapté pour gérer des autorisations d'accès à la grille par les utilisateurs. À ce titre, il est à noter qu'un tel serveur géoportail ne constitue pas un site central ou un serveur central dans lequel sont enregistrées les données d'observation à délivrer aux utilisateurs, ou qui serait nécessaire pour déterminer la localisation d'enregistrement des données d'observation faisant l'objet d'une requête utilisateur et/ou pour rapatrier lesdites données d'observation vers chaque utilisateur. En effet, dans un dispositif selon l'invention, la grille permet de partager de façon transparente et automatique des données d'observation avec chaque utilisateur connecté à cette grille sans nécessiter aucun site central de sélection ou de transmission des informations. Dans un dispositif d'observation selon l'invention, le serveur géoportail n'a donc pour fonction que de gérer le contrôle de l'accès par les utilisateurs à la grille formant le dispositif.

De préférence, dans un dispositif d'observation selon l'invention, lesdites données d'observation étant des données aptes à être visualisées sous forme d'images, chaque station terrestre de réception et d'enregistrement est adaptée pour traiter les données d'observation qu'elle reçoit de chaque satellite, de façon à former et à enregistrer dans ses moyens de mémorisation des images correspondantes directement exploitables par un utilisateur, la grille ainsi formée rendant directement accessible à l'utilisateur l'intégralité des images d'observation issue des différents satellites pour les différentes zones d'observation enregistrées dans les différentes stations terrestres de réception et d'enregistrement. En particulier, chaque station terrestre de réception et d'enregistrement maintient à jour dans ses propres moyens de mémorisation une mosaïque locale formée de sa propre zone d'observation enregistrée et des différentes zones d'observations enregistrées adjacentes d'autres stations terrestres de réception et d'enregistrement, les différentes données d'observation correspondantes étant formatées, calibrées et traitées de façon homogène pour pouvoir être directement exploitables par les utilisateurs.

À ce titre, plusieurs variantes de l'invention sont possibles. Selon une première variante de réalisation conforme à l'invention, le module de gestion de chaque station terrestre de réception et d'enregistrement est adapté pour mettre à disposition dynamiquement et en temps réel les données d'observation telles qu'enregistrées en dernier lieu dans les moyens de mémorisation sur la grille satellitaire. Autrement dit, dans cette variante de réalisation, chaque utilisateur peut obtenir, via le serveur géoportail, les données d'observation les plus récentes d'une zone d'observation quelconque, telles qu'elles sont reçues et enregistrées en dernier lieu dans la station terrestre de réception et d'enregistrement correspondante. Cette variante de réalisation permet de procurer en permanence une image la plus récente des différentes zones d'observation balayées par la constellation de satellites, et donc de la Terre si le nombre de satellites de la constellation est suffisant.

Dans une deuxième variante, rien n'empêche de prévoir au contraire que les différentes données d'observation reçues par les différentes stations terrestres de réception et d'enregistrement fassent l'objet d'un traitement périodique collectif, par exemple tous les jours ou toutes les semaines, de façon à être datées pour former un jeu complet de données d'observation à jour mis à disposition des utilisateurs, par exemple par la fourniture de données via des serveurs géoportails, sous forme d'une représentation de la Terre.

L'invention s'applique en particulier à un dispositif permettant d'obtenir une observation de l'intégralité de la surface de la Terre avec les caractéristiques mentionnées ci-dessus. Ainsi, avantageusement et selon l'invention, chaque satellite présente une fauchée F et une orbite basse de telle sorte qu'il puisse décrire un nombre ORB d'orbites supérieur à 1 en une journée, et le nombre de satellites est adapté pour que la surface terrestre à observer corresponde à l'intégralité de la surface de la Terre. L'invention s'applique néanmoins également à d'autres constellations de satellites plus limitées dans leur portée d'observation et/ou à l'observation de l'espace.

L'invention représente ainsi une rupture dans la conception des dispositifs d'observation de la Terre, se fondant sur une grille d'interconnexion transparente, permanente, automatique de ses différents organes constitutifs (stations terrestres de réception et d'enregistrement et/ou satellites et/ou antennes), cette grille constituant l'élément essentiel du dispositif d'observation.

L'invention concerne également un dispositif -notamment un dispositif d'observation- caractérisé en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :

- la figure 1 est une vue schématique d'un dispositif d'acquisition et de distribution de données d'observation de la Terre selon un mode de réalisation de l'invention,
- la figure 2 est une vue schématique d'un dispositif terrestre formant une grille satellitaire selon un mode de réalisation de l'invention,
- la figure 3 est une vue schématique d'une station terrestre de réception et d'enregistrement d'une grille satellitaire selon un mode de réalisation de l'invention.

Sur les figures, les échelles et les proportions ne sont pas respectées et ce, à des fins d'illustration et de clarté.

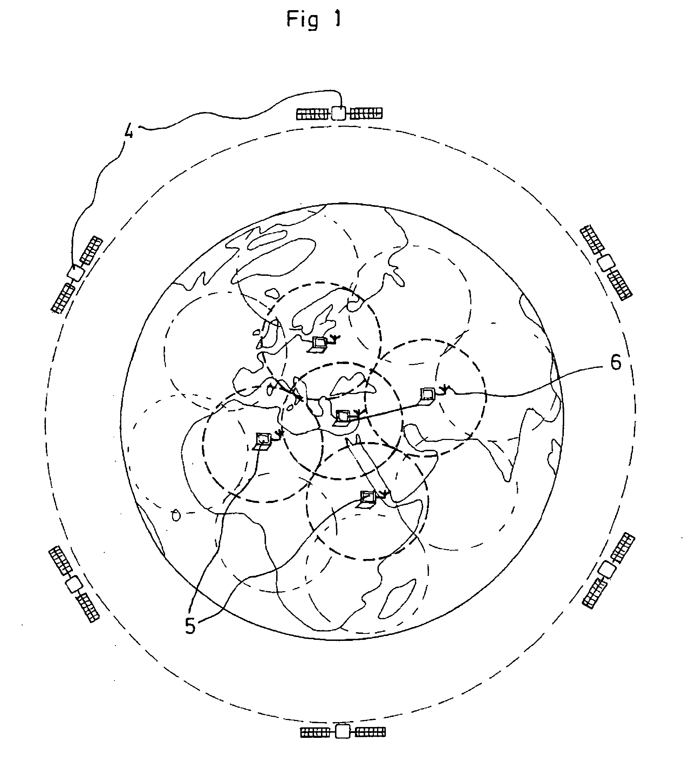

Tel que représenté sur la figure 1, un dispositif d'observation de la Terre selon l'invention comprend une constellation de satellites 4 et une pluralité de stations 5 terrestres de réception et d'enregistrement de données communicantes entre elles, formant un dispositif terrestre selon l'invention, dit grille satellitaire.

Chaque satellite 4 comprend en outre au moins un dispositif -notamment un dispositif optique- d'acquisition de données d'observation à visée fixe.

Un tel dispositif d'acquisition de données d'observation est par exemple une caméra fixe orientée vers la Terre et adaptée pour acquérir des données d'observation -notamment des images- multispectrales de régions de l'atmosphère et/ou de la surface terrestres que le satellite 4 survole.

Selon un mode de réalisation possible de l'invention, un tel satellite est un parachute optique tel que décrit par exemple par WO2005110848. Ainsi, un satellite 4 d'un dispositif selon l'invention ne nécessite pas de programme de pointage particulier, ce qui réduit sensiblement les coûts de fabrication et de maintenance.

Chaque satellite 4 comprend en outre au moins un module d'émission de données d'observation adapté pour émettre après chaque acquisition de données d'observation par un dispositif d'acquisition de données d'observation de ce satellite 4, les données d'observation acquises vers la couche terrestre (station 5). Un tel module d'émission peut être de tous types connus et n'est pas décrit ici en détail.

Le dispositif selon l'invention comprend une pluralité de stations 5 terrestres de réception et d'enregistrement formant une grille satellitaire.

Chaque station 5 terrestre d'enregistrement comprend au moins un module 12 de réception de données d'observation adapté pour recevoir des données d'observation issues de la couche spatiale d'acquisition de données d'observation.

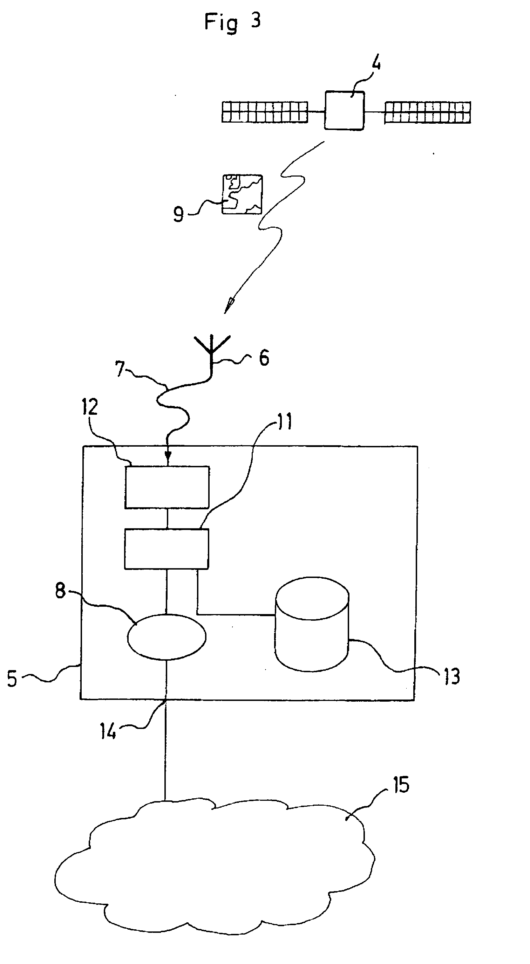

Chaque station 5 terrestre d'enregistrement comprend, en outre, tel que représenté sur la figure 3, une unité 11 de traitement adaptée pour traiter les données d'observation 9 reçues par le module 12 de réception de cette station 5 terrestre d'enregistrement.

Une unité 11 de traitement de données d'observation d'une station 5 terrestre d'enregistrement est par exemple une unité de traitement informatique, notamment de type micro-ordinateur, comprenant des moyens matériels et logiciels de traitement d'informations (microprocesseur(s), mémoires morte(s) et vive(s) associées, système d'exploitation et autres applications logicielles, périphériques et pilotes de périphériques, cartes et bus correspondants, interface homme/machine...). En particulier, l'unité 11 est adaptée pour pouvoir réaliser le traitement et l'enregistrement des données d'observation, et la connexion à au moins un réseau 15 numérique.

Chaque station 5 terrestre d'enregistrement comprend en particulier des moyens 13 de mémorisation des données d'observation traitées par l'unité 11 de traitement. Ces moyens 13 de mémorisation sont reliés localement à l'unité 11 de traitement et peuvent être de tous types. Par exemple, ces moyens 13 de mémorisation sont formés d'une mémoire de masse telle qu'une mémoire à disque(s) dur(s).

Chaque station 5 terrestre d'enregistrement comprend aussi une connexion 14 à un réseau 15 numérique de manière d'une part à être reliée aux autres stations 5 terrestres d'enregistrement, d'autre part à pouvoir mettre les données d'observation mémorisées par ses moyens 13 de mémorisation à disposition d'utilisateurs reliés à ce réseau 15 numérique, le cas échéant après autorisation par un serveur, dit serveur géoportail, lui-même également relié au réseau 15 numérique et permettant la gestion administrative et financière des autorisations d'accès à la grille par des utilisateurs.

Cette connexion 14 au réseau 15 numérique de chaque station 5 terrestre d'enregistrement est gérée par l'intermédiaire d'un module, dit module 8 de gestion, chargé et exécuté par l'unité 11 de traitement de chaque station 5 terrestre de réception et d'enregistrement, de sorte que les différentes stations 5 terrestres d'enregistrement sont interconnectées en permanence les unes aux autres via ledit réseau 15 numérique selon une architecture informatique de grille permettant le partage transparent permanent de ressources informatiques, et notamment un accès partagé transparent permanent aux données d'observation (en provenance de la constellation des satellites 4) enregistrées dans les moyens 13

de mémorisation des différentes stations 5 terrestre d'enregistrement. La fonction principale de chaque station 5 terrestre d'enregistrement consiste ainsi à permettre d'une part la mémorisation de données d'observation sur une mémoire de masse locale (moyens 13 de mémorisation), d'autre part d'interconnecter et de partager en lecture ces données d'observation via la grille satellitaire, de sorte qu'elles puissent être vues à partir de tout point d'accès à cette grille satellitaire.

Ainsi, les différentes stations 5 terrestres de réception et d'enregistrement interconnectées via le réseau 15 numérique forment une grille satellitaire accessible à partir de tout point d'accès audit réseau 15 numérique, et vue, à partir d'un tel point d'accès, comme une ressource informatique unique et globale. En particulier, un utilisateur autorisé par le serveur géoportail à formuler une requête concernant des données d'observation, par exemple des données d'observation d'une région donnée de la surface terrestre, accède directement ou via le serveur géoportail à l'ensemble de la grille ainsi formée, de sorte que les données d'observation correspondantes sont accessibles en lecture et, le cas échéant peuvent être téléchargées vers l'utilisateur, de façon transparente via la grille, quelle que soit la station 5 terrestre d'enregistrement d'origine où ces informations sont mémorisées.

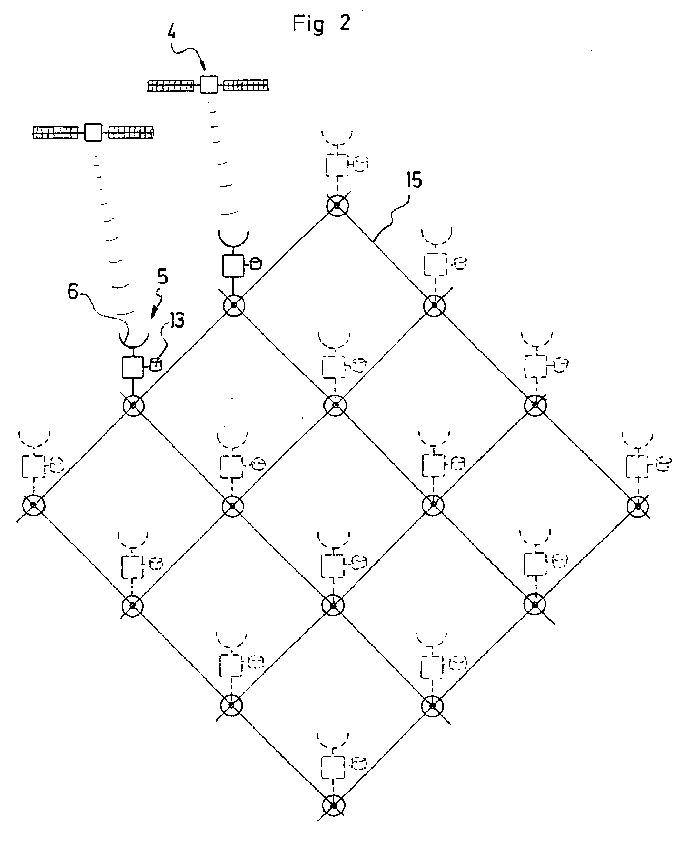

Dès lors, dans un dispositif d'observation selon l'invention, la grille satellitaire formée par les différentes stations 5 terrestre de réception et d'enregistrement, ainsi que le réseau 15 numérique font en réalité partie intégrante de ce dispositif d'observation, en ce sens que les fonctionnalités du dispositif d'observation sont perdues, ou en tout cas très fortement dégradées, si tout ou partie de la grille n'est pas fonctionnelle. Une telle grille satellitaire est représentée schématiquement sur la figure 2.

Le module 8 de gestion peut être formé de tout module de grille informatique connu, notamment Globus ToolKit, ou encore choisi parmi les suites logicielles gLite (EGEE), UNICORE, ou Synfiniway (Fujitsu), ou le logiciel e-mule (www.emule-project.net).

Chaque station 5 terrestre de réception et d'enregistrement est reliée à au moins une antenne 6 de réception -notamment à une et une seule antenne 6 de réception qui lui est propre- par une liaison 7. Cette liaison peut être de tous types. Par exemple, cette liaison 7 peut être une liaison filaire, une liaison sans fil radio, wifi, etc.

Les antennes 6 de réception peuvent être plus ou moins distantes des stations 5 terrestres d'enregistrement. De préférence, chaque station 5 terrestre d'enregistrement comprend localement une antenne 6 de réception. En variante, chaque antenne 6 de réception fait partie d'une station de réception indépendante comprenant une unité de traitement informatique à laquelle antenne 6 de réception est reliée et qui est distincte de celle de la station 5 terrestre d'enregistrement. Dans ce cas, chaque station de réception est connectée au réseau 15 numérique et comprend également un module 8 de gestion de façon à être incorporée à la grille satellitaire et donc interconnectée avec les stations 5 terrestre d'enregistrement.

La grille satellitaire ainsi formée d'un dispositif selon l'invention présente d'abord comme fonction de mettre à disposition sur le réseau 15 numérique automatiquement, de façon transparente et en temps réel, les données d'observation mémorisées dans chaque mémoire 13 de masse de chaque station 5 terrestre d'enregistrement.

En outre, dans le cas le plus fréquent où ces données d'observation sont adaptées pour pouvoir être visualisées sous forme d'images, ces données d'observation sont traitées en tant qu'images directement disponibles pour l'utilisateur, et chaque station 5 terrestre d'enregistrement est adaptée pour pouvoir mémoriser dans sa mémoire 13 de masse non seulement les données d'observation correspondant exactement à son cercle de visibilité, mais également toutes les données d'observation correspondant aux stations 5 terrestre d'enregistrement immédiatement adjacentes, c'est-à-dire dont le cercle de visibilité jouxte celui de la station 5 terrestre d'enregistrement. Ainsi, chaque station 5 terrestre d'enregistrement détient dans sa mémoire 13 de masse une mosaïque locale de toutes les données d'observation correspondant à sa zone d'observations enregistrées et aux frontières entre cette zone dans sa relation enregistrée et les zones immédiatement adjacentes. En outre, cette mosaïque locale de chaque station 5 terrestre d'enregistrement est directement accessible via la grille pour un utilisateur.

La grille satellitaire ainsi formée permet également dans le sens inverse de réaliser de façon extrêmement simple et fiable une télécommande des satellites 4. Pour ce faire, chaque station 5 terrestre d'enregistrement (ou au moins une partie d'entre elles) est également associée à une antenne d'émission apte à établir une liaison montante vers tout satellite 4 passant dans la zone de visibilité de cette antenne d'émission. Une telle antenne d'émission peut faire partie intégrante de la station 5 terrestre d'enregistrement, ou, en variante, comme décrit ci-dessus en relation à l'antenne 6 de réception, faire partie d'une station d'émission indépendante distincte, elle-même reliée à la grille satellitaire et dotée d'un module 8 de gestion.

L'émission d'une telle télécommande à destination d'un satellite 4 via la grille satellitaire est extrêmement simple. En effet, cette télécommande peut être tout d'abord élaborée par un module de télécommande approprié et bien connu en lui-même, à destination d'un ou plusieurs satellites 4. Le module de télécommande peut déterminer lui-même d'une part chaque satellite destinataire, d'autre part chaque station 5 terrestre chargée d'émettre cette télécommande, et insérer des données d'identification de chaque satellite destinataire et/ou de chaque station terrestre de réception et d'enregistrement dans l'adresse et/ou des métadonnées et/ou des données de la télécommande. En variante préférentielle, le module de télécommande diffuse la télécommande sur la grille, et chacune des stations 5 terrestre de la grille qui est associée à au moins une antenne d'émission est adaptée pour émettre cette télécommande vers chaque satellite passant dans le champ d'émission de cette antenne d'émission, les différents satellites 4 recevant la télécommande, chaque satellite 4 déterminant si cette télécommande lui est ou non destinée.

Le nombre et la répartition des antennes 6 de réception et, le cas échéant, des antennes d'émission, à la surface de la Terre et la constellation de satellites 4 sont adaptés pour que :

- chaque satellite 4 survole au moins une antenne 6 de réception et, le cas échéant, au moins une antenne d'émission,
- chaque antenne 6 de réception et, le cas échéant, chaque antenne d'émission, est survolée par au moins un satellite 4.

Selon un mode préférentiel de réalisation de l'invention, le dispositif comprend en outre M stations 5 terrestres de réception et d'enregistrement, où

$$M = \alpha . \left( \frac{C}{\pi . r} \right)^2$$ , $r$ étant le rayon moyen des cercles de visibilité associés aux antennes 6 de réception reliées aux modules 12 de réception des stations 5 terrestres d'enregistrement et $\alpha$, un coefficient prédéterminé permettant d'assurer un recouvrement des cercles de visibilité.

$\alpha$ est un coefficient qui permet d'assurer un recouvrement des différents cercles de visibilité des antennes associées aux modules de réception. En pratique, $\alpha$ est compris entre 1,1 et 1,25 ce qui permet d'obtenir des taux de recouvrement des zones de visibilité compris entre 10 % et 25 %.

Ainsi, un satellite est, quelle que soit sa position, en visibilité d'au moins une antenne 6 de réception.

Selon un mode préférentiel de réalisation, le coefficient $\alpha$ est fixé à 1,2, ce qui permet d'obtenir un taux de recouvrement de 20%.

Selon un mode préférentiel de réalisation de l'invention, le nombre de stations 5 terrestres d'enregistrement du dispositif terrestre d'enregistrement de données d'observation est égal au nombre de satellites 4 de la couche 1 spatiale d'acquisition de données d'observation.

Une antenne 6 de réception associée à un module 12 de réception d'une station 5 terrestre d'enregistrement peut être de tous types. En particulier, une antenne 6 peut présenter divers cercles de visibilité, en fonction notamment de son élévation. Selon un mode de réalisation de l'invention, chaque antenne 6 présente un cercle de visibilité de 2500 km.

Selon ce mode de réalisation, un dispositif selon l'invention peut comprendre vingt-cinq antennes 6 associées à vingt-cinq stations terrestres de réception et d'enregistrement distribuées sur la surface de la Terre.

Dans le cas où le réseau 15 numérique est le réseau Internet, la mise en place d'un dispositif selon l'invention est particulièrement aisée et économique.

De plus, dans le cas où les antennes 6 de réception et/ou d'émission sont distantes des stations 5 terrestres d'enregistrement, les liaisons entre les stations de réception et/ou d'émission de ces antennes, et les stations 5 terrestres d'enregistrement sont également formées avantageusement par le réseau 15 numérique, et de préférence par la grille formée par les stations 5 terrestre d'enregistrement et le réseau 15 numérique, c'est-à-dire que les stations des antennes sont elles-mêmes reliées au réseau 15 numérique et dotées d'un module 8 de grille configuré de façon que toutes les informations et données transitant par chaque antenne soient gérées par ce module 8 de gestion, et donc partagées sur la grille satellitaire. En particulier, les modules 8 de gestion sont configurés pour présenter au moins un répertoire de l'unité 11 de traitement dédié à l'enregistrement des données d'observation, et pour permettre l'accès au moins en lecture à ce répertoire à partir de tout accès utilisateur sur la grille satellitaire.

Avantageusement et selon l'invention, les satellites 4 sont également eux-mêmes dotés chacun d'une unité de traitement avec un module 8 de gestion, de telle sorte qu'ils sont intégrés à la grille formée par les stations 5 terrestre d'enregistrement et le réseau 15 numérique, via les liaisons de communication établies entre les satellites 4 et les stations 5 terrestres d'enregistrement. Ainsi, dans un dispositif selon l'invention, les satellites 4 peuvent être configurés pour mettre à disposition des données d'observation sur la grille, de sorte que ces informations soient directement accessibles par les stations 5 terrestre d'enregistrement, qui peuvent ensuite les traiter pour les enregistrer dans leurs moyens 13 de mémorisation spécifique, notamment en tant qu'images directement accessibles aux utilisateurs.

En d'autres termes, un dispositif d'observation selon l'invention peut être vu comme une grille en réseau comprenant une pluralité de serveurs formés d'une part, par des stations 5 terrestres d'enregistrement, des antennes 6 de réception et/ou des antennes d'émission et, d'autre part, par des satellites 4 en orbite d'acquisition de données d'observation.

Les communications entre la couche spatiale d'acquisition de données d'observation et le dispositif terrestre d'enregistrement de données d'observation peuvent être de tous types.

Par exemple, selon un mode de réalisation préférentiel de l'invention, les communications entre la couche 1 spatiale d'acquisition de données d'observation et le dispositif terrestre d'enregistrement de données d'observation utilisent un protocole UMTS.

Selon d'autres modes de réalisation, les communications peuvent utiliser d'autres protocoles, comme par exemple les protocoles fondés sur les technologies futures telles que la technologie OFDM (*Orthogonal Fre-*

*quency Division Multiplexing*) ou la technologie HSPA (*High Speed Downlink Package Acess*).

Selon un mode de réalisation préférentiel de l'invention, les données d'observation sont comprimées à bord des satellites 4 avant d'être envoyées vers le dispositif terrestre d'enregistrement de données d'observation. Cette compression peut être de tous types, comme par exemple une compression JPEG.

Un dispositif d'observation selon l'invention permet par exemple de manière simple et économique de réaliser des prises de vues métriques quotidiennes de l'ensemble de la Terre.

Ces prises de vues peuvent avantageusement être distribuées par l'intermédiaire de la grille, mais si nécessaire sous le contrôle d'un serveur auquel se connectent des utilisateurs agréés.

Pour ce faire, et comme indiqué ci-dessus, un dispositif selon l'invention comprend avantageusement un serveur, dit serveur géoportail, relié par le réseau 15 numérique public, à la grille des stations 5 terrestres d'enregistrement.

Ce serveur comprend des moyens de réception d'une requête de connexion en provenance d'un utilisateur distant, des moyens d'analyse de cette requête, des moyens de vérification des droits d'accès de cet utilisateur, des moyens d'autorisation ou d'interdiction d'accès à la grille par cet utilisateur.

Il est à noter cependant qu'un tel serveur géoportail ne constitue cependant en aucune manière un site central ou un serveur central sur lequel les différentes informations sont mémorisées ou gérées, puisqu'au contraire, les différentes informations ou images accessibles aux utilisateurs sont traitées et réparties dans les moyens 13 de mémorisation des différentes stations 5 terrestre d'enregistrement interconnectées par la grille.

L'image de la Terre obtenue par un dispositif d'observation selon l'invention est distribuée sur la surface de la Terre. En revanche, pour un utilisateur, cette distribution est transparente étant donné que les données d'observation faisant l'objet d'une requête par un utilisateur via un module de grille de ce dernier sont automatiquement rapatriées et mises à disposition de l'utilisateur via la grille.

Un tel serveur géoportail est par exemple un micro-ordinateur comprenant des moyens de calcul, des moyens de mémorisation, des logiciels d'analyse des requêtes et de traitement des requêtes, etc.

Un dispositif d'observation selon l'invention permet d'acquérir et de fournir des informations, notamment des images, d'observation terrestre qui présentent des résolutions spatiale et temporelle élevées, notamment de l'ordre respectivement du mètre et de la journée.

Un dispositif d'observation selon l'invention distribue physiquement l'ensemble des données d'observation acquises sur la Terre, ce qui permet le rapatriement et le traitement des données. En particulier, les bandes-passantes utilisées sont compatibles avec les technologies aujourd'hui disponibles.

Un dispositif d'observation selon l'invention ne nécessite aucun dépointage des dispositifs d'acquisition de données d'observation à bord des satellites.

De plus, un dispositif d'observation selon l'invention ne nécessite aucun serveur central d'enregistrement et/ou de référencement et/ou de distribution des données d'observation. Les données d'observation sont constamment distribuées sur la Terre et mémorisées dans les moyens de mémorisation des différentes stations terrestres de réception et d'enregistrement.

Un dispositif selon l'invention est particulièrement adapté à fournir des données d'observation de la Terre à des utilisateurs connectés à un réseau numérique public du type Internet. En particulier, un dispositif selon l'invention permet à tout utilisateur connecté à ce réseau, de récupérer une image d'une portion de la Terre présentant une résolution de l'ordre du mètre et datant de moins d'une journée. Dès lors, l'invention ouvre la voie à de nombreuses applications nouvelles, notamment dans les domaines de l'agriculture, la cartographie, la sécurité, la défense, l'environnement, la planification urbaine, les télécommunications, la gestion des risques, la gestion des ressources renouvelables, etc.

L'invention peut faire l'objet de nombreuses variantes non spécifiquement décrites. En particulier, un dispositif selon l'invention peut comprendre d'autres dispositifs d'acquisition de données d'observation agencés à bord d'autres engins volants, voire même agencés en haut d'édifices terrestres, tels que des immeubles, et transmettre les données d'observation acquises vers la couche de traitement des données d'observation par l'intermédiaire de la couche de télécommunications. Cette couche de télécommunications peut également comprendre différents dispositifs additionnels permettant de véhiculer les données d'observation de la couche d'acquisition de données d'observation jusqu'au dispositif terrestre selon l'invention d'enregistrement de données d'observation. Ces dispositifs additionnels sont par exemple des antennes relais, des réseaux intermédiaires, etc.. Le dispositif terrestre selon l'invention d'enregistrement de données d'observation peut comprendre une grande variété de stations terrestres de réception et d'enregistrement distribuées sur la surface de la Terre. Ces de réception et d'enregistrement peuvent être des micro-ordinateurs connectés à un réseau public tel qu'Internet, et de manière générale tout dispositif adapté pour recevoir une image (ou autres données d'observation), traiter l'image, l'enregistrer en mémoire de masse, et la mettre à disposition d'utilisateurs du réseau.

Par ailleurs, les stations 5 terrestres d'enregistrement peuvent être connectées à plusieurs réseaux numériques, et en particulier à au moins un réseau numérique autre que le réseau Internet, par exemple à un réseau numérique spécifique (même si ce réseau numérique spécifique peut être lui-même fondé en tout ou partie sur des communications via le réseau Internet). En outre, le dispositif terrestre selon l'invention peut être utilisé non seulement avec une constellation de satellites 4 comme décrit ci-dessus, mais, si nécessaire, avec plusieurs constellations de satellites en parallèle. Par exemple, le même dispositif terrestre selon l'invention peut recevoir à la fois des données d'observation issues d'une première constellation de satellites réalisant des observations dans le domaine visible, et, d'autre part, des observations provenant d'une deuxième constellation de satellites, par exemple réalisant des observations de l'espace et/ou de paramètres physiques de l'environnement terrestre, par exemple des mesures de champ magnétique et/ou des observations dans le domaine des hyperfréquences.

**Revendications**

**1.** Dispositif comprenant une pluralité de stations (5) terrestres de réception et d'enregistrement de données dotées de moyens (13) de mémorisation de ces données, chaque station (5) terrestre étant associée à des moyens de réception de données d'observation en provenance d'au moins un satellite en orbite autour de la Terre, **caractérisé en ce que** :

- les données d'observation reçues d'au moins un satellite sont et restent réparties dans les moyens (13) de mémorisation des différentes stations (5) terrestres de réception et d'enregistrement,
- chaque station (5) terrestre de réception et d'enregistrement est reliée fonctionnellement aux autres stations (5) terrestres de réception et d'enregistrement par au moins un réseau (15) numérique, et est dotée d'au moins un module (8), dit module (8) de gestion, adapté pour que les différentes stations (5) terrestres de réception et d'enregistrement soient interconnectées les unes aux autres par les différents modules (8) de gestion via le réseau (15) numérique, selon une architecture, dite grille satellitaire, adaptée pour permettre un accès partagé transparent permanent auxdites données d'observation en provenance d'au moins un satellite enregistrées réparties dans les moyens (13) de mémorisation des différentes stations (5) terrestres de réception et d'enregistrement, ladite grille satellitaire étant adaptée pour rendre l'ensemble de données d'observation enregistrées réparties dans les différentes stations (5) terrestres de réception et d'enregistrement accessible et vu comme un jeu de données d'observation unique à partir de tout point d'accès du réseau (15) numérique.

**2.** Dispositif selon la revendication 1, **caractérisé en ce que** chaque station (5) terrestre de réception et d'enregistrement est en outre associée à des moyens (10) d'émission de données vers au moins un satellite (4), et **en ce qu'**il comprend au moins un module de télécommande adapté pour pouvoir générer au moins une commande à destination d'au moins un satellite (4) et émettre une telle commande sur la grille.

3. Dispositif selon l'une des revendications 1 ou 2, **caractérisé en ce que** ledit réseau (15) numérique de ladite grille satellitaire est un réseau (15) numérique terrestre public.

4. Dispositif selon l'une des revendications 1 à 3, **caractérisé en ce que** lesdites données d'observation étant des données aptes à être visualisées sous forme d'images, chaque station (5) terrestre de réception et d'enregistrement est adaptée pour traiter les données d'observation qu'elle reçoit de chaque satellite (4), de façon à former et à enregistrer dans ses moyens (13) de mémorisation des images correspondantes directement exploitables par un utilisateur, la grille satellitaire ainsi formée rendant directement accessible à l'utilisateur l'intégralité des images d'observation enregistrées dans les différentes stations (5) terrestres de réception et d'enregistrement.

5. Dispositif d'observation selon l'une des revendications 1 à 4, **caractérisé en ce qu'**il comprend :

   - au moins une constellation de satellites (4) déployée en orbite autour de la Terre, chaque satellite (4) comprenant au moins un dispositif d'acquisition de données d'observation, et au moins un dispositif de transmission de ces données d'observation à destination d'antennes (6) de réception situées à la surface de la Terre, chaque station (5) terrestre de réception et d'enregistrement étant associée à au moins une antenne (6) de réception,
   - le dispositif de transmission de chaque satellite (4) étant adapté pour pouvoir transmettre des données d'observation à toute antenne (6) de réception située dans un champ de vision de ce dispositif de transmission, chaque antenne (6) de réception étant adaptée pour pouvoir recevoir des données d'observation transmises par un satellite (4) lorsque ladite antenne (6) de réception est située dans le champ de vision du dispositif de transmission dudit satellite (4).

6. Dispositif d'observation selon la revendication 5, **caractérisé en ce que** le dispositif d'acquisition de données d'observation de chaque satellite (4) est adapté pour acquérir des données d'observation de la Terre et présente un champ de vision prédéterminé correspondant à une zone de la surface de la Terre en visibilité de ce dispositif d'acquisition, et **en ce que** chaque station (5) terrestre de réception et d'enregistrement comprend des moyens (13) de mémorisation de données d'observation issues au moins d'une zone terrestre, dite zone d'observation enregistrée, comprenant au moins l'enveloppe des champs de vision du dispositif d'acquisition de chaque satellite (4) dans lesquelles l'antenne (6) de réception de la station terrestre de réception et d'enregistrement est située, le nombre et la répartition des différentes stations (5) terrestres de réception et d'enregistrement étant adaptés pour que lesdites zones d'observation enregistrées correspondantes soient complémentaires et permettent une couverture d'une surface terrestre à observer, les différentes données d'observation correspondant à cette surface à observer étant réparties dans les moyens (13) de mémorisation des différentes stations (5) terrestres de réception et d'enregistrement, ladite grille satellitaire étant une grille de stockage adaptée pour que toutes les données d'observation mémorisées par les différentes stations (5) terrestres de réception et d'enregistrement soient accessibles en permanence comme une ressource informatique unique à partir de tout point d'accès du réseau (15) numérique de ladite grille satellitaire.

7. Dispositif d'observation selon la revendication 6, **caractérisé en ce que** la zone d'observation enregistrée d'au moins une station (5) terrestre de réception et d'enregistrement comprend au moins une zone située en dehors de l'enveloppe des champs de vision des satellites (4) contenant l'antenne (6) de réception de la station (5) terrestre de réception et d'enregistrement.

8. Dispositif d'observation selon l'une des revendications 6 ou 7, **caractérisé en ce que** chaque station (5) terrestre de réception et d'enregistrement est adaptée pour rechercher et incorporer dans ses moyens (13) de mémorisation les données d'observation de chaque station (5) terrestre de réception et d'enregistrement dont la zone d'observation enregistrée est adjacente à la sienne, de sorte que chaque station (5) terrestre de réception et d'enregistrement incorpore une mosaïque locale des différentes zones d'observation enregistrées adjacentes à la sienne.

9. Dispositif d'observation selon l'une des revendications 5 à 8, **caractérisé en ce que** chaque dispositif de transmission d'un satellite (4) est adapté pour transmettre les données d'observation selon un format incorporant des métadonnées et/ou données, dites données de géolocalisation, représentatives de la localisation de la zone observée et de la date d'observation.

10. Dispositif d'observation selon l'une des revendications 5 à 9, **caractérisé en ce que** chaque station (5) terrestre de réception et d'enregistrement est en outre associée à une antenne (10) d'émission vers un satellite (4), et **en ce que** les antennes (10) de réception et d'émission, les dispositifs de transmission des satellites (4) et les stations (5) terrestres sont adaptés pour permettre l'établissement d'échanges bidirectionnels entre les satellites (4) et les stations (5) terrestres.

11. Dispositif d'observation selon la revendication 10, **caractérisé en ce qu'**il comprend au moins un module de télécommande adapté pour pouvoir émettre des commandes vers chaque satellite (4), et **en ce que** chaque module de télécommande est relié audit réseau (15) numérique et à la grille satellitaire de stations (5) terrestres de réception et d'enregistrement à laquelle il adresse chaque commande à transmettre vers un satellite (4), ladite commande étant émise simultanément par toutes les stations (5) terrestres de réception et d'enregistrement.

12. Dispositif d'observation selon l'une des revendications 5 à 11, **caractérisé en ce que** chaque satellite (4) comprend également un module (8) de gestion de façon à être incorporé à la grille satellitaire formée par les différentes stations (5) terrestres de réception et d'enregistrement et le réseau (15) numérique qui les relie.

13. Dispositif d'observation selon l'une des revendications 5 à 12, **caractérisé en ce que** ladite grille satellitaire est connectée à un réseau (15) numérique terrestre public.

14. Dispositif d'observation selon l'une des revendications 5 à 13, **caractérisé en ce que** chaque station (5) terrestre de réception et d'enregistrement est adaptée pour traiter les données d'observation qu'elle reçoit de chaque satellite (4), de façon à former et à enregistrer dans ses moyens (13) de mémorisation des images correspondantes directement exploitables par un utilisateur, la grille satellitaire ainsi formée rendant directement accessible à l'utilisateur l'intégralité des images d'observation issues des différents satellites pour les différentes zones d'observation enregistrées dans les différentes stations (5) terrestres de réception et d'enregistrement.

15. Dispositif d'observation selon l'une des revendications 5 à 14, **caractérisé en ce que** le module (8) de gestion de chaque station (5) terrestre de réception et d'enregistrement est adapté pour mettre à disposition dynamiquement les données d'observation telles qu'enregistrées en dernier lieu dans les moyens (13) de mémorisation sur la grille satellitaire.

**Claims**

1. Device comprising a plurality of terrestrial stations (5) for reception and recording of data, provided with means (13) for storage of these data, each terrestrial station (5) being associated with means for receiving observation data emanating from at least one satellite in orbit around the Earth, **characterised in that**:

   - the observation data received from at least one satellite are and remain distributed in the storage means (13) of the various terrestrial stations (5) for reception and recording,
   - each terrestrial station (5) for reception and recording is functionally connected to the other terrestrial stations (5) for reception and recording by at least one digital network (15) and is provided with at least one module (8), called the management module (8), that is suitable so that the various terrestrial stations (5) for reception and recording are interconnected by the various management modules (8) via the digital network (15) in accordance with an architecture, called the satellite grid, that is suitable to enable a shared transparent and permanent access to said observation data emanating from at least one satellite, which are recorded distributed in the storage means (13) of the various terrestrial stations (5) for reception and recording, said satellite grid being suitable to render accessible the totality of recorded observation data distributed in the various terrestrial stations (5) for reception and recording and to enable said totality to be seen as a single set of observation data from any access point of the digital network (15).

2. Device according to Claim 1, **characterised in that** each terrestrial station (5) for reception and recording is, in addition, associated with means (10) for sending data to at least one satellite (4), and **in that** it includes at least one remote-control module that is suitable to be able to generate at least one command destined for at least one satellite (4) and to send such a command on the grid.

3. Device according to one of Claims 1 or 2, **characterised in that** said digital network (15) of said satellite grid is a public terrestrial digital network (15).

4. Device according to one of Claims 1 to 3, **characterised in that**, since said observation data are data capable of being displayed in the form of images, each terrestrial station (5) for reception and recording is suitable to process the observation data that it receives from each satellite (4) in such a way as to form and to record in its storage means (13) corresponding images that can be utilised directly by a user, the satellite grid thus formed rendering directly accessible to the user the entirety of the observation images recorded in the various terrestrial stations (5) for reception and recording.

5. Observation device according to one of Claims 1 to 4, **characterised in that** it includes:

> - at least one constellation of satellites (4), deployed in orbit around the Earth, each satellite (4) including at least one device for acquisition of observation data and at least one device for transmission of these observation data to receiving antennas (6) situated on the surface of the Earth, each terrestrial station (5) for reception and recording being associated with at least one receiving antenna (6),
> - the transmission device of each satellite (4) being suitable to be able to transmit observation data to any receiving antenna (6) situated in a field of view of this transmission device, each receiving antenna (6) being suitable to be able to receive observation data transmitted by a satellite (4) when said receiving antenna (6) is situated in the field of view of the transmission device of said satellite (4).

6. Observation device according to Claim 5, **characterised in that** the device for acquisition of observation data of each satellite (4) is suitable to acquire observation data pertaining to the Earth and exhibits a predetermined field of view corresponding to a zone of the surface of the Earth in the line of sight of this acquisition device, and **in that** each terrestrial station (5) for reception and recording includes storage means (13) of observation data stemming from at least one terrestrial zone, called the recorded observation zone, including at least the envelope of the fields of view of the acquisition device of each satellite (4), in which the receiving antenna (6) of the terrestrial station for reception and recording is situated, the number and the distribution of the various terrestrial stations (5) for reception and recording being suitable so that said corresponding recorded observation zones are complementary and enable coverage of a terrestrial surface to be observed, the various observation data corresponding to this surface to be observed being distributed in the storage means (13) of the various terrestrial stations (5) for reception and recording, said satellite grid being a storage grid that is suitable so that all the observation data stored by the various terrestrial stations (5) for reception and recording are permanently accessible as a single data-processing resource from any access point of the digital network (15) of said satellite grid.

7. Observation device according to Claim 6, **characterised in that** the recorded observation zone of at least one terrestrial station (5) for reception and recording includes at least one zone situated outside the envelope of the fields of view of the satellites (4) containing the receiving antenna (6) of the terrestrial station (5) for reception and recording.

8. Observation device according to one of Claims 6 or 7, **characterised in that** each terrestrial station (5) for reception and recording is suitable to search for and incorporate into its storage means (13) the observation data of each terrestrial station (5) for reception and recording, the recorded observation zone of which is adjacent to its own, so that each terrestrial station (5) for reception and recording incorporates a local mosaic of the various recorded observation zones adjacent to its own.

9. Observation device according to one of Claims 5 to 8, **characterised in that** each transmission device of a satellite (4) is suitable to transmit the observation data in accordance with a format incorporating metadata and/or data, called geopositioning data, that are representative of the location of the observed zone and the date of observation.

10. Observation device according to one of Claims 5 to 9, **characterised in that** each terrestrial station (5) for reception and recording is, in addition, associated with an antenna (10) for sending to a satellite (4), and **in that** the receiving and sending antennas (10), the transmission devices of the satellites (4), and the terrestrial stations (5) are suitable to enable the establishment of bidirectional exchanges between the satellites (4) and the terrestrial stations (5).

11. Observation device according to Claim 10, **characterised in that** it includes at least one remote-control module that is suitable to be able to send commands to each satellite (4), and **in that** each remote-control module is connected to said digital network (15) and to the satellite grid of terrestrial stations (5) for reception and recording, to which it addresses each command to be transmitted to a satellite (4), said command being sent simultaneously by all the terrestrial stations (5) for reception and recording.

12. Observation device according to one of Claims 5 to 11, **characterised in that** each satellite (4) also includes a management module (8) in such a way as to be incorporated into the satellite grid formed by the various terrestrial stations (5) for reception and recording and the digital network (15) which connects them.

13. Observation device according to one of Claims 5 to 12, **characterised in that** said satellite grid is connected to a public terrestrial digital network (15).

14. Observation device according to one of Claims 5 to 13, **characterised in that** each terrestrial station (5) for reception and recording is suitable to process the observation data that it receives from each satellite (4) in such a way as to form and to record in its storage means (13) corresponding images that can be utilised directly by a user, the satellite grid thus formed rendering directly accessible to the user the entirety of the observation images stemming from the various satellites for the various observation zones recorded in the various terrestrial stations (5) for reception and recording.

15. Observation device according to one of Claims 5 to 14, **characterised in that** the management module (8) of each terrestrial station (5) for reception and recording is suitable to make the observation data as recorded last of all in the storage means (13) dynamically available on the satellite grid.


**Patentansprüche**

1. Vorrichtung, umfassend eine Vielzahl von terrestrischen Daten-Empfangs- und -Speicherstationen (5), die mit Speichermitteln (13) dieser Daten versehen sind, wobei jede terrestrische Station (5) Empfangsmitteln von Beobachtungsdaten zugeordnet sind, die aus wenigstens einem Satellit in Umlauf um die Erde stammen, **dadurch gekennzeichnet, dass**:

   - die Beobachtungsdaten, die von wenigstens einem Satelliten empfangen werden, in den Speichermitteln (13) der verschiedenen terrestrischen Empfangs- und Speicherstationen (5) verteilt sind und bleiben,
   - jede terrestrische Empfangs- und Speicherstation (5) funktional mit den anderen terrestrischen Empfangs- und Speicherstationen (5) durch wenigstens ein digitales Netz (15) verbunden ist und mit wenigstens einem Modul (8), bezeichnet als Verwaltungsmodul (8), versehen ist, das dazu geeignet ist, dass die verschiedenen terrestrischen Empfangs- und Speicherstationen (5) miteinander durch die verschiedenen Verwaltungsmodule (8) über das digitale Netz (15) gemäß einer Architektur, bezeichnet als Satellitengitter, das geeignet ist, um einen geteilten, transparenten, permanenten Zugang zu den anderen Beobachtungsdaten herzustellen, die aus wenigstens einem Satelliten stammen, in den Speichermitteln (13) der verschiedenen terrestrischen Empfangs- und Speicherstationen (5) gespeichert und verteilt sind, verbunden sind, wobei das genannte Satellitengitter geeignet ist, um alle gespeicherten, verteilten Beobachtungsdaten in den verschiedenen terrestrischen Empfangs- und Speicherstationen (5) zugänglich und von jedem Zugangspunkt des digitalen Netzes (15) als einen einzigartigen Satz Beobachtungsdaten sichtbar zu machen.

2. Vorrichtung gemäß Anspruch 1, **dadurch gekennzeichnet, dass** jede terrestrische Empfangs- und Speicherstation (5) darüber hinaus Sendemitteln (10) von Daten zu wenigstens einem Satelliten (4) zugeordnet ist und dass sie wenigstens ein Fernbedienungsmodul umfasst, das geeignet ist, um wenigstens einen an wenigstens einen Satelliten (4) gerichteten Befehl generieren zu können und einen derartigen Befehl an das Gitter zu senden.

3. Vorrichtung gemäß Anspruch 1 oder 2, **dadurch gekennzeichnet, dass** das genannte digitale Netz (15) des genannten Satellitengitters ein öffentliches terrestrisches digitales Netz (15) ist.

4. Vorrichtung gemäß Anspruch 1 bis 3, **dadurch gekennzeichnet, dass** die genannten Beobachtungsdaten Daten sind, die geeignet sind, in Form von Bildern angezeigt zu werden, wobei jede terrestrische Empfangsund Speicherstation (5) dazu geeignet ist, die Beobachtungsdaten zu bearbeiten, die sie von jedem Satelliten (4) derart empfängt, dass in ihren Speichermitteln (13) entsprechende Bilder geformt und gespeichert werden, die direkt von einem Benutzer verwendbar sind, wobei das auf diese Weise geformte Satellitengitter dem Benutzer alle Beobachtungsbilder direkt zugänglich macht, die in den verschiedenen terrestrischen Empfangs- und Speicherstationen (5) gespeichert werden.

5. Beobachtungsvorrichtung gemäß Anspruch 1 bis 4, **dadurch gekennzeichnet, dass** sie umfasst:

   - wenigstens eine Satellitenkonstellation (4), die in Umlauf um die Erde stationiert ist, wobei jeder Satellit (4) wenigstens eine Vorrichtung zur Erfassung von Beobachtungsdaten und wenigstens eine Vorrichtung zur Übertragung dieser Beobachtungsdaten für Empfangsantennen (6) umfasst, die sich an der Oberfläche der Erde befinden, wobei jede terrestrische Empfangs- und Speicherstation (5) wenigstens einer Empfangsantenne (6) zugeordnet ist,
   - wobei die Übertragungsvorrichtung jedes Satelliten (4) geeignet ist, um Beobachtungsdaten an jede Empfangsantenne (6) zu übertragen, die sich in einem Sichtfeld dieser Übertragungsvorrichtung befindet, wobei jede Empfangsantenne (6) dazu geeignet ist, Beobachtungsdaten empfangen zu können, die von einem Satelliten (4) übertragen werden, wenn die genannte Empfangsantenne (6) sich in dem Sichtfeld der Übertragungsvorrichtung des genannten Satelliten (4) befindet.

6. Beobachtungsvorrichtung gemäß Anspruch 5, **dadurch gekennzeichnet, dass** die Vorrichtung zum Erfassen von Beobachtungsdaten jedes Satelliten (4) dazu geeignet ist, Beobachtungsdaten der Erde zu erfassen und ein vorbestimmtes Sichtfeld aufweist, das einem Bereich der Oberfläche der Erde im Sichtbereich dieser Vorrichtung zur Erfassung entspricht und dass jede terrestrische Empfangs- und Speicherstation (5) Speichermittel (13) von Beobachtungsdaten umfasst, die aus wenigstens einem terrestrischen Bereich, bezeichnet als gespeicherter Beobachtungsbereich, stammen, der wenigstens eine Hülle der Sichtbereiche der Vorrichtung zur Erfassung jedes Satelliten (4) umfasst, in denen sich die Empfangsantenne (6) der terrestrischen Empfangs- und Speicherstation befindet, wobei die Anzahl und die Verteilung der verschiedenen terrestrischen Empfangs- und Speicherstationen (5) dazu geeignet sind, dass die genannten entsprechenden gespeicherten Beobachtungsbereiche komplementär sind und eine Abdeckung einer zu beobachtenden terrestrischen Oberfläche zulassen, wobei die verschiedenen Beobachtungsdaten dieser zu beobachtenden Oberfläche entsprechen, die in den Speichermitteln (13) der verschiedenen terrestrischen Empfangs- und Speicherstationen (5) verteilt sind, wobei das genannte Satellitengitter ein Speichergitter ist, das dazu geeignet ist, dass alle von den verschiedenen terrestrischen Empfangs- und Speicherstationen (5) gespeicherten Beobachtungsdaten permanent als eine einzigartige Informationsquelle ausgehend von jedem Zugangspunkt des digitalen Netzes (15) des genannten Satellitengitters zugänglich sind.

7. Beobachtungsvorrichtung gemäß Anspruch 6, **dadurch gekennzeichnet, dass** der gespeicherte Beobachtungsbereich wenigstens einer terrestrischen Empfangsund Speicherstation (5) wenigstens einen Bereich umfasst, der sich wenigstens außerhalb der Hülle der Sichtfelder der Satelliten (4) befindet, der die Empfangsantenne (6) der terrestrischen Empfangs- und Speicherstation (5) enthält.

8. Beobachtungsvorrichtung gemäß Anspruch 6 oder 7, **dadurch gekennzeichnet, dass** jede terrestrische Empfangs- und Speicherstation (5) dazu geeignet ist, in ihren Speichermitteln (13) die Beobachtungsdaten jeder terrestrischen Empfangs- und Speicherstation (5) zu suchen und zu integrieren, deren gespeicherter Beobachtungsbereich ihrem eigenen derart anliegt, dass jede terrestrische Empfangs- und Speicherstation (5) ein lokales Mosaik der verschiedenen gespeicherten, ihrem eigenen anliegenden Beoachtungsbereiche beinhaltet.

9. Beobachtungsvorrichtung gemäß Anspruch 5 bis 8, **dadurch gekennzeichnet, dass** jede Übertragungsvorrichtung eines Satelliten (4) dazu geeignet ist, die Beobachtungsdaten gemäß einem Format zu übertragen, das Metadaten und / oder Daten, bezeichnet als Geolokalisationsdaten, beinhaltet, die die Lokalisation des Beobachtungsbereichs und das Beobachtungsdatum darstellen.

10. Beobachtungsvorrichtung gemäß Anspruch 5 bis 9, **dadurch gekennzeichnet, dass** jede terrestrische Empfangs- und Speicherstation (5) darüber hinaus einer Senderantenne (10) zu einem Satelliten (4) zugeordnet ist und dass die Empfangs- und Sendeantennen (10), die Übertragungsvorrichtungen der Satelliten (4) und die terrestrischen Stationen (5) dazu geeignet sind, die Festlegung des Austauschs in beide Richtungen zwischen den Satelliten (4) und den terrestrischen Stationen (5) zu erlauben.

11. Beobachtungsvorrichtung gemäß Anspruch 10, **dadurch gekennzeichnet, dass** sie wenigstens ein Fernbedienungsmodul umfasst, das geeignet ist, um Befehle zu jedem Satelliten (4) senden zu können und dass jedes Fernbedienungsmodul mit dem genannten digitalen Netz (15) und dem Satellitengitter von terrestrischen Empfangs- und Speicherstationen (5) verbunden ist, an das es jeden Befehl richtet, der auf einen Satelliten (4) zu übertragen ist, wobei der genannte Befehl gleichzeitig von allen terrestrischen Empfangs- und Speicherstationen (5) gesendet wird.

12. Beobachtungsvorrichtung gemäß Anspruch 5 bis 11, **dadurch gekennzeichnet, dass** jeder Satellit (4) ebenfalls ein Verwaltungsmodul (8) derart umfasst, dass es in das Satellitengitter integriert wird, das von den verschiedenen terrestrischen Empfangs- und Speicherstationen (5) und dem digitalen Netz (15) geformt wird, das sie verbindet.

13. Beobachtungsvorrichtung gemäß Anspruch 5 bis 12, **dadurch gekennzeichnet, dass** das genannte Satellitengitter an ein öffentliches terrestrisches digitales Netz (15) angeschlossen ist.

14. Beobachtungsvorrichtung gemäß Anspruch 5 bis 13, **dadurch gekennzeichnet, dass** jede terrestrische Empfangs- und Speicherstation (5) dazu geeignet ist, die Beobachtungsdaten zu verarbeiten, die sie von jedem Satelliten (4) derart empfängt, dass in ihren Speichermitteln (13) entsprechende Bilder geformt und gespeichert werden, die von einem Benutzer direkt nutzbar sind, wobei das auf diese Weise geformte Satellitengitter dem Benutzer alle Beobachtungsbilder für die verschiedenen Beobachtungsbereiche, die in den verschiedenen terrestrischen Empfangs- und Speicherstationen (5) gespeichert wurden, direkt zugänglich macht, die aus den verschiedenen Satelliten stammen.

**15.** Beobachtungsvorrichtung gemäß Anspruch 5 bis 14, **dadurch gekennzeichnet, dass** das Verwaltungsmodul (8) jeder terrestrischen Empfangs- und Speicherstation (5) dazu geeignet ist, die Beobachtungsdaten so, wie sie an letzter Stelle in den Speichermitteln (13) im Satellitengitter gespeichert wurden, dynamisch zur Verfügung zu stellen.

Fig 1

Fig 2

## Fig 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2432486 A
- US 5883584 A

- WO 2005110848 A